# EUROPEAN PATENT SPECIFICATION

(11) **EP 4 491 891 B1**
(45) Date of publication and mention of the grant of the patent: **13.05.2026**
(21) Application number: 24188123.4
(22) Date of filing: 11.07.2024
(51) Int. Cl.: F16B 19/10

(54) **FASTENER**
BEFESTIGUNGSELEMENT
DISPOSITIF DE FIXATION

(30) Priority: 14.07.2023 US 202318352482
(43) Date of publication of application: 15.01.2025
(73) Proprietor: Centrix AeroSpace LLC, Kent, Washington 98032 (US)
(72) Inventor: McClure, Travis, Chelan Falls, 98817 (US)
(74) Representative: DTS Patent- und Rechtsanwälte PartmbB

(56) References cited:
- EP-A1- 3 848 595
- WO-A1-2004/037483
- WO-A2-2009/115691
- US-A1- 2021 025 424
- US-A1- 2021 207 639

## Description

### FIELD

The present description relates generally to a fastener with a body assembly that includes a sleeve and a shaft.

### BACKGROUND AND SUMMARY

Many manufacturing fields use fasteners for securing multiple work pieces to one another. Blind fasteners are one type of fastener that is particularly useful in space constrained environments, when only one side of a joint is accessible, for instance. Blind fasteners have been used in industries such as the aerospace industry to secure floor panels to underlying floor beams, in some use cases. In other aerospace industry use cases, fasteners have been used to attach wing components, fuselage components, pylons, etc., to increase manufacturing adaptability. Previous fasteners have included a screw which interacts with a collet body to expand clamping legs in the collet body. When expanded, the legs act as a lower clamping arm to enable axial clamping of a workpiece stack. US2021207639A1 describes a known fastener.

Some fasteners have included collet bodies with clamping arms. To engage the clamping arms, a spindle threads into the collet body and pulls the collet body over the spindle such that a lower end of the spindle pushes the clamping arms radially outward. However, when this type of fastener is clamping at its minimum thickness, a portion of the spindle protrudes well below the clamping arms.

The inventor has recognized several drawbacks with previous fasteners. For instance, the type of fastener described above with the spindle and the collet body may present issues in space constrained installation environments, especially on the distal side of the parts to be clamped. For instance, the fastener may be unable to be installed in areas with tight clearance and may present an impediment to manufacturing personnel, in some scenarios. Further, when these fasteners are used in robotic manufacturing, the spindle may interfere with robotic components that are working on the distal side of the parts. Additionally, the threaded portion of the spindle may not be an ideal surface for some robotic sensors to resynchronize on. Resynchronization is the process of a robotic machine measuring the features of the temporary fastener in order to calculate a theoretical centerline of the hole in which the temporary fastener is located. This allows the robot to get a "fix" on its location so that it can move to the next coordinate (in order to do work (e.g., drill a hole) with increased accuracy). The inventor has therefore recognized a need to provide a fastener with characteristics that allow it to be installed in a wider range of manufacturing environments, allow for distal side robotic resynchronization, as well as carry higher loads.

Facing the aforementioned challenges, the inventor developed a fastener to at least partially overcome the challenges. The invention is a fastener as defined in claim 1 and a method of operating a fastener according to claim 8.

The fastener includes, in one example, a distal end that has a constant distance from the distal clamping surface while also have a distal end that is shaped to facilitate effective robotic resynchronization. The fastener, in another example, includes a body assembly configured to transition the fastener between a clamping configuration and an insertion and removal configuration. The body assembly is further configured to, in the clamping configuration, adjust an axial length between a proximal clamping surface and a distal clamping surface while an axial length between the distal clamping surface and a distal end of the fastener remains constant. Further, in the fastener, the body assembly includes a shaft that is axially spaced away from a drive screw. Designing the fastener with this functionality enables effective robotic resynchronization on the distal end of the fastener while also enabling the fastener to be installed in a much wider range of environments, particularly in space constrained environments, when compared to fasteners where the axial length between the distal end of the fastener grows as the distance between the clamping arms decreases. To elaborate, the fastener with the aforementioned characteristics, allows the fastener to be installed in environments with limited backside clearances and assists in backside robotic work both for clearance of robotic movement and the ability of the robotic machine to resynchronize on the fastener's distal end, if desired. Consequently, the fastener applicability is expanded and appeals to a wider customer base.

In one example, the body assembly may include a pin mated with multiple axially extending slots in a sleeve and an opening in the shaft. In such an example, the axial position of the pin in the axially extending slots may vary when the fastener transitions between the clamping configuration and the insertion and removal configuration. Further, in such an example, the axial position of the pin in the axially extending slots may remain constant while the fastener is in the clamping configuration regardless if the fastener is clamping parts of minimum thickness or maximum thickness, for instance. Designing the body assembly with the pin and slots with the aforementioned functionality allows the position of the shaft and the sleeve to vary when the fastener transitions into and out of the clamping configuration, but once in the clamping configuration, maintain a constant axial distance between the distal end of the fastener and the distal clamping surfaces. As a result, the fastener is even more aptly suited for installation in space constrained environments and for robotic resynchronization, if desired.

According to the invention, the body assembly includes multiple clamping feet openings in the sleeve. The body assembly further includes a collet body with one or more legs that extend from a crown and each leg includes a clamping foot. The clamping feet extend through the clamping feet openings. When the fastener is in the clamping configuration, a surface of the clamping feet contacts with a surface of the clamping feet openings and transfers loads thereto. In this way, the load path through the fastener can be directed to the sleeve which is able to carry more load than the collet body legs are capable of. Thus, the fastener is able to carry greater loads. Consequently, the fastener's durability is increased and the fastener's applicability is further expanded.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 is a perspective assembled view of a first example of a fastener.
FIG. 2 is an exploded view of the fastener, depicted in FIG. 1.
FIGS. 3A-3C are different views of a sleeve in the fastener, depicted in FIG. 1.
FIG. 4 is a side view of the fastener, depicted in FIG. 1, in an insertion and removal configuration.
FIG. 5 is a cross-sectional view of the fastener, depicted in FIG. 4.
FIGS. 6A-6C are detailed views of the fastener, depicted in FIG. 5.
FIG. 7 is a perspective view of the fastener, depicted in FIG. 1, in a clamping configuration.
FIG. 8 is a cross-sectional view of the fastener, depicted in FIG. 7.
FIG. 9 is a cross-sectional view of the fastener, depicted in FIG. 1, in a clamping configuration which clamps workpieces.
FIGS. 10A-10C are detailed views of the fastener, depicted in FIG. 9.
FIGS. 11A-11D are different disassembled views of the fastener, depicted in FIG. 1.
FIG. 12 is another example of a fastener, not belonging to the invention
FIG. 13 is an exploded view of the fastener, depicted in FIG. 12.
FIGS. 14 is a perspective view of the fastener, depicted in FIG. 12, in an insertion and removal configuration.
FIG. 15 is a cross-sectional view of the fastener, depicted in FIG. 12, in an insertion and removal configuration.
FIGS. 16A-16C are detailed views of sections of the fastener, depicted in FIG. 15.
FIG. 17 is a perspective view of the fastener depicted in FIG. 12, in a clamping configuration.
FIG. 18 is a cross-sectional view of the fastener in the clamping configuration.
FIGS. 19A-19C are detailed views of sections of the fastener, depicted in FIG. 18.
FIG. 20 is a perspective view of the fastener, depicted in FIG. 12, clamping a workpiece stack.
FIG. 21 is a cross-sectional view of the fastener, depicted in FIG. 20.
FIGS. 22A-22C are detailed views of sections of the fastener, depicted in FIG. 21.
FIG. 23 is a method for operation of a fastener.

### DETAILED DESCRIPTION

A fastener is described herein that maintains a constant distance between a distal end of the fastener and distal clamping surfaces (e.g., distal clamping arms) while the distance between the distal clamping surfaces and a proximal clamping surface (e.g., upper clamping arm) varies between the minimum and maximum fastener clamping ranges or any smaller range therein. In this way, the fastener is capable of being used in spaced constrained environments and used in conjunction with robotic equipment that operates at the distal end of the fastener while achieving a comparatively wide range of grip length adjustability. To achieve this functionality, a body assembly is provided in the fastener and may include a pin mate with multiple axially extending slots in a sleeve and an opening in a shaft. In the fastener's body assembly, the shaft is spaced away from a drive screw. Further in such an example, the axial position of the pin in the slots varies when the fastener transitions between the clamping configuration and the insertion and removal configuration. Conversely, the axial position of the pin in the slots remains constant while the fastener is in the clamping configuration and the axial length between the proximal and the distal clamping surfaces is adjusted. As described herein, the clamping configuration denotes an arrangement of the fastener where clamping feet are expanded. It will be appreciated that the transition into the clamping configuration where the clamping feet are expanded, can be implemented to prepare the fastener for workpiece clamping. As such, the fastener may be in the clamping configuration in anticipation of subsequent workpiece clamping by the fastener or while the fastener is exerting an axial clamping force on the workpieces. It will be understood that to exert the clamping force on the workpieces, the fastener's grip length is decreased after the clamping feet are expanded.

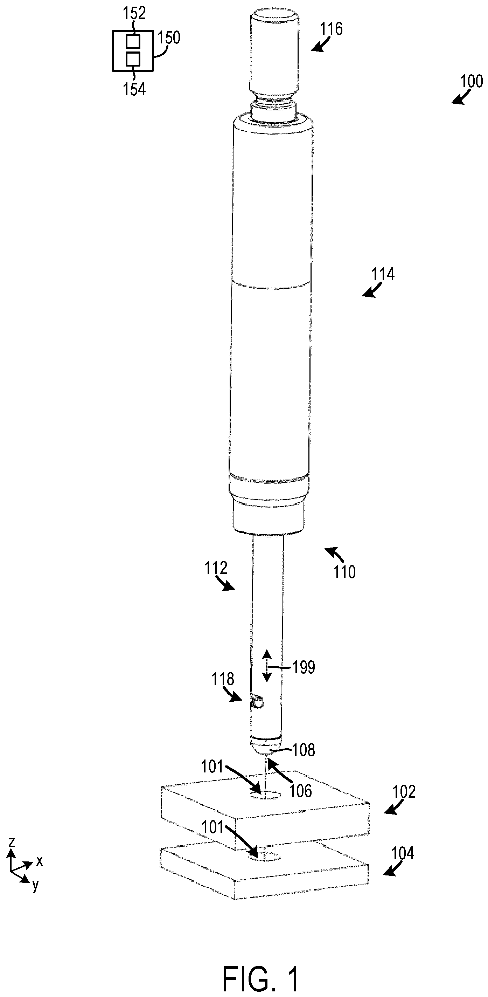

FIG. 1 shows a first example of a fastener 100 (e.g., blind fastener or single sided fastener) prior to insertion into openings 101 of workpieces 102 and 104 for clamping. The workpiece 102 may be an upper workpiece and the workpiece 104 may be a lower workpiece. However, the workpieces may have a variety of arrangements with regard to a gravitational axis. Further, the fastener may be used to clamp workpiece stacks with three or greater workpieces.

The fastener 100 is illustrated in an insertion and removal configuration in FIG. 1. In the insertion and removal configuration the fastener is ready to be installed through openings 101 in workpieces 102 and 104. As such, the insertion and removal configuration may be referred to as a ready to be installed configuration. Conversely, when the fastener is in the clamping configuration, the fastener may be prepared for clamping or physically clamping the workpieces. To elaborate, after the fastener is inserted into the workpiece openings in the insertion and removal configuration, the fastener may then be transitioned into the clamping configuration, to prepare the fastener for clamping. This specific fastener configuration may be referred to as a ready to be clamped configuration. After this transition, the fastener's grip length is decreased until the workpieces are clamped. This fastener configuration may be referred to as a clamped configuration.

When in the clamping configuration, the fastener 100 illustrated in FIG. 1 and the other fasteners described herein are designed to maintain a constant axial distance between a distal end 106 of the fastener 100 (formed by a lower end of a cap 108 (e.g., an end cap) and the distal clamping arms in the example illustrated in FIG. 1). Fasteners with distal ends located in other components have been contemplated. For instance, the distal end of the fastener may be included in the fastener's shaft, in alternate examples. The cap 108 is specifically illustrated as a rounded cap such as a semi-spherical cap (e.g., a domed cap), in the illustrated example. However, other cap contours have been contemplated, such as caps with different curvatures and/or flat surfaces. When the fastener includes a cap and specifically a dome cap, the efficiency of robotic manufacturing processes which employ the fastener may be increased due to the robotic manufacturing devices being able to quickly visually identify the cap and use it as a reference point. Fasteners without an end cap have also been contemplated.

The fastener 100 further includes a body assembly 110. The body assembly 110 is configured to transition the fastener between a clamping configuration and an insertion and removal configuration. The fastener is shown in the insertion and removal configuration in FIG. 1, as previously indicated. However, the clamping configuration and the body assembly's functionality in this configuration is expanded upon herein. The body assembly 110 includes a sleeve 112 among other components which are discussed in greater detail herein.

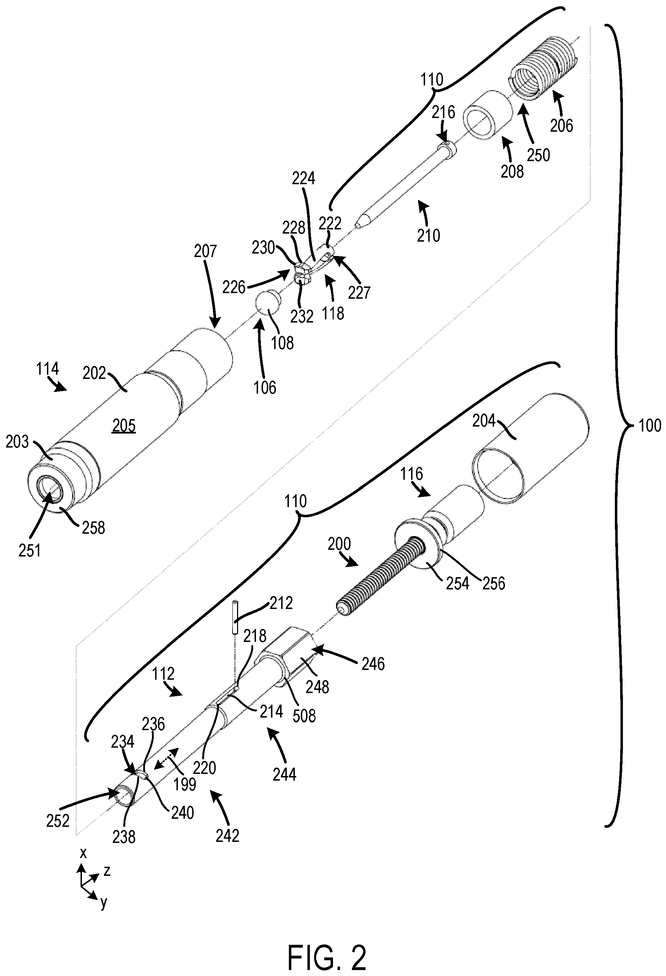

The fastener 100 further includes a housing 114 and a drive head 116 which is profiled to interact with a tool that induces rotation of a drive screw 200, shown in FIG. 2, discussed in greater detail herein. For example, the drive head may include an extension (e.g., a polygonal extension) that is profiled to be driven via socket, a recess (e.g., a polygonal recess) designed to be driven by bits, combinations thereof, and the like. The fastener 100 further includes a collet body 118 whose functionality and structure is discussed in greater detail herein.

An axis system is provided in FIG. 1 as well as FIG. 2-22C, for reference. The z-axis may be a vertical axis (e.g., parallel to a gravitational axis), the x-axis may be a lateral axis (e.g., horizontal axis), and/or the y-axis may be a longitudinal axis, in one example. However, the axes may have other orientations, in other examples. Further, a central axis 199 of the fastener 100 depicted in FIG. 1 as well as the fasteners depicted in FIGS. 2-22C, for reference. Further, above and below as discussed herein may refer to relative proximal and distal positions in the fastener. However, it will be appreciated that the fastener's central axis may or may not be aligned with a gravitational axis in different installation orientations.

FIG. 1 further shows a tooling apparatus 150 (e.g., robotic tooling machine) that may be used to manipulate the fastener 100 (e.g., rotate the drive head 116 while preventing rotation of the housing 114, for instance). The tooling apparatus 150, illustrated in FIG. 1, may include a processor 152 and memory 154 (e.g., non-transitory memory) storing instructions executable by the processor. The automated tooling apparatus 150 may further include tooling attachments, arms, carriages, and the like, for manipulating the fastener as well as perform other manufacturing operations such as resynchronization of the fastener, for instance. The other fasteners described herein may be manipulated using a similar tooling apparatus.

An exploded view of the fastener 100 is illustrated in FIG. 2. The fastener 100 includes a body assembly 110. The body assembly 110 is configured to transition the fastener between clamped and insertion and removal configurations. Thus, the body assembly may be transitioned from the clamping configuration to the insertion and removal configuration, and vice versa.

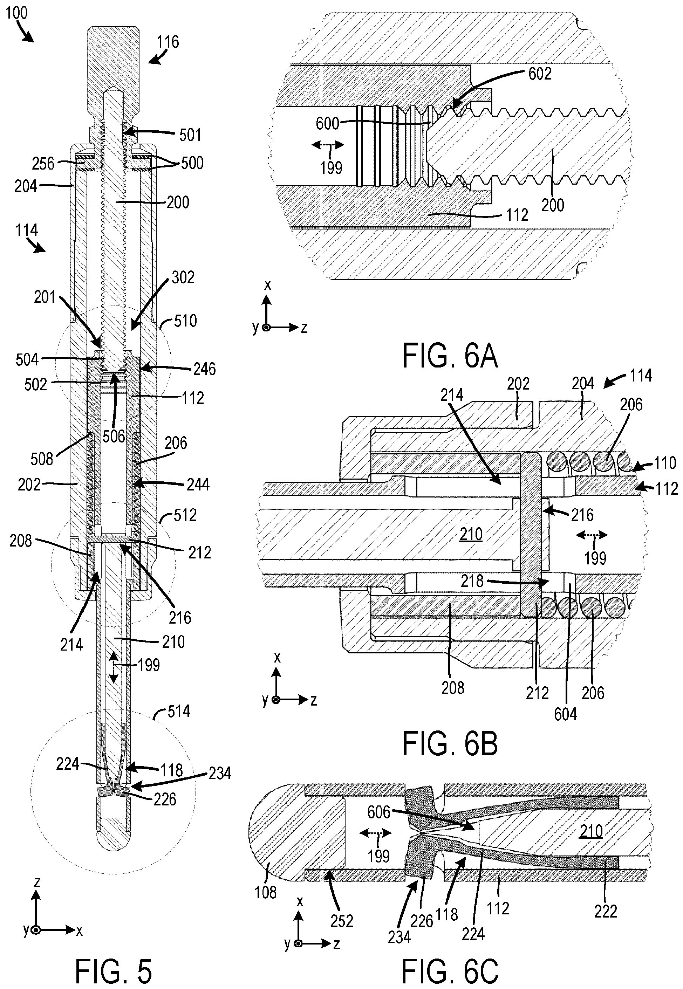

The body assembly 110 includes the sleeve 112 positioned within the housing 114, when the fastener is assembled. The body assembly 110 further includes the drive screw 200 which is fixedly coupled to the drive head 116 when the fastener is assembled. Further, the drive screw is threaded into the sleeve 112 when the fastener is in the ready to be clamping configuration as well as other configurations. However, it will be understood that the fastener may be designed with free-spin functionality and in the free-spin configuration, the drive screw 200 is unthreaded from the sleeve 112 and allowed to independently rotate with regard to the sleeve. The fastener's free-spin feature is expanded upon herein. To achieve the threaded engagement between the screw and the sleeve, the drive screw 200 includes threads that engage threads in an upper opening 201, shown in FIG. 5, of the sleeve 112 and discussed in greater detail herein. The drive head 116 is configured to drive rotation of the screw 200 while the axial position of the drive head remains substantially constant. However, in other examples, the fastener may include other suitable mechanisms for inducing rotation of the screw.

The housing 114 includes a lower section 202 and an upper section 204, in the illustrated example. These sections may be removably coupled (e.g., press-fit, screwed, glued, combinations thereof, and the like) to one another. Further, the lower section 202 may be constructed in multiple sections. In such an example, a portion 203 of the lower housing section may be press-fit, threadingly attached, glued, combinations thereof, or otherwise coupled to a body 205. However, alternate housing constructions have been contemplated. For instance, the lower section may be constructed as a monolithic piece.

The housing section 202 may have a counterbore 207 at a proximal end, in one example. The counterbore 207 may be sized to allow a flange 256 of the drive head 116 and specifically a surface 254 of the flange to rest against the bottom of the counterbore. Further, in such an example, a locking ring may mate with the housing section 202 proximal to the flange 256 and prevents the drive screw from leaving the housing. However, other housing constructions may be used in alternate examples.

The collet body 118 in the fastener 100 is again shown in FIG. 2. The collet body 118 includes a crown 222 with legs 224 that extend therefrom. The legs 224 includes clamping feet 226. A slit 227 may be included in the crown 222 to allow the crown to be inserted into the sleeve 112. However, in alternate examples, the collet body may include multiple distinct sections each of which includes a crown and a leg with a clamping foot. The clamping feet 226 each include a clamping surface 228 that functions as a distal clamping surface. The distal clamping surface may be referred to as a lower clamping surface, although the fastener may have a variety of orientations with regard to the gravitational axis. The fastener's proximal clamping surface(s), discussed in greater detail herein, may similarly be referred to as upper clamping surfaces.

The clamping feet 226 may each further include side surfaces 230 and an under surface 232, in the illustrated example. However, other clamping foot contours have been contemplated. The clamping feet 226 mate with openings 234 in the sleeve 112 when the fastener is assembled. Therefore, the openings 234 circumferentially enclose the clamping feet 226. The openings 234 each include an upper surface 236, a lower surface 238, and lateral surfaces 240, in the illustrated example. However, sleeve openings with alternate contours have been envisioned. For instance, a curved lower surface may extend from the upper surface. The clamping feet may be contoured in a similar manner, in such an example.

As illustrated in FIG. 2, the sleeve 112 may be conceptually divided into a lower section 242, a middle section 244, and an anti-rotation section 246. However, the sleeve may be demarcated in another manner, in alternate examples.

The openings 234 are positioned in the lower section 242 of the sleeve 112, in the example illustrated in FIG. 2. Further, the slots 214 are positioned in the middle section 244, in the illustrated example. Further, in one example configuration, the middle section 244 has a larger diameter than the lower section 242 and the anti-rotation section 246 has a larger diameter than the middle section 244, as illustrated. However, other sleeve configurations may be used, in other examples. The anti-rotation section 246 has a polygonal shape (e.g., a hexagonal, a pentagonal, or a quadrilateral shape) with multiple planar faces 248, in the illustrated example.

Generally, the anti-rotation section may include at least two planar faces to provide anti-rotation functionality. However, in alternate examples, the anti-rotation section of the sleeve may include one or more pins that mate with slots in the upper section of the housing. A ledge 508, discussed in greater detail herein, which is formed between the anti-rotation section 246 and the middle section 244 of the sleeve 112, is further depicted in FIG. 2.

The body assembly 110 further includes a spring 206, a spacer 208 (e.g., component bushing), a shaft 210, and a pin 212. The shaft 210 is spaced away from the drive screw 200 when the fastener 100 is assembled. When assembled, the pin 212 mates with slots 214 in the sleeve 112 and an opening 216 (e.g., radially aligned opening) in a head of the shaft 210. The mating of the pin 212 with the sleeve slots 214 and the shaft opening 216 allows the fastener to be transitioned between the clamped and insertion and removal configurations by allowing the shaft to axially translate with regard to the sleeve 112 -. To elaborate, the pin 212 may be in contact with or near the proximal sides 218 (e.g., proximal axial sides) of the sleeve slots 214 when the fastener 100 is in an insertion and removal configuration. Conversely, the pin 212 may be in contact with or near the distal sides 220 (e.g., distal axial sides) of the sleeve slots 214 when the fastener 100 is in the clamping configuration. Therefore, enabling this shift in the axial position of the shaft 210 with regard to the sleeve 112 allows the fastener to transition between the clamped and insertion and removal configurations. However, when the fastener is in the clamping configuration, the axial position of the sleeve and the shaft remains constant.

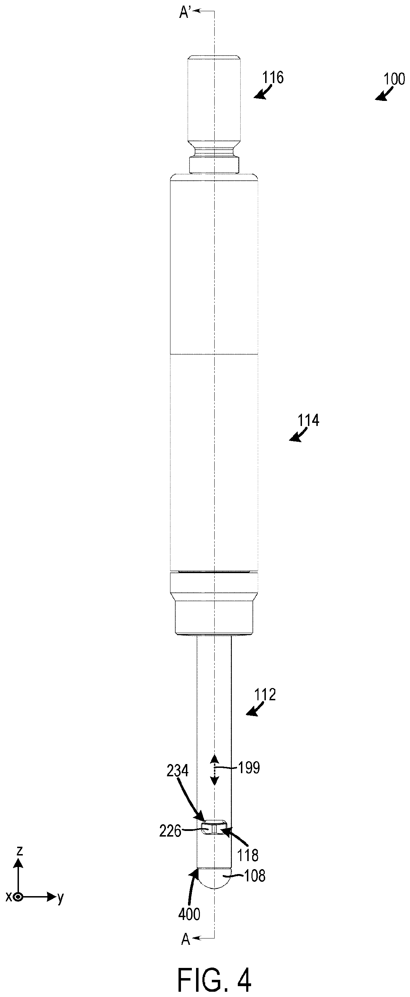

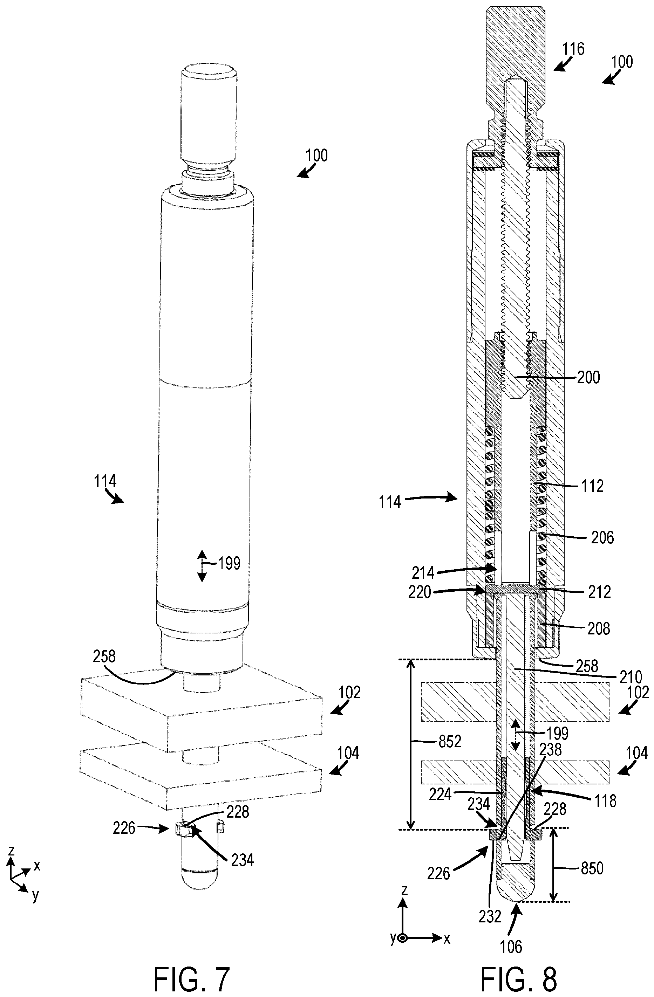

To expound, when the fastener is assembled, the pin 212 mating with the sleeve slots 214 and shaft openings 216 functions as an axial timing or limitation mechanism. To elaborate, the pin 212 may be held tight against the spacer by the spring 206 when the fastener is assembled and in the installation and removal configuration which is discussed in greater detail herein. By extension, the shaft 210 is also held in position. However, the sleeve 112 is able to axially travel when threadingly drawn by the drive screw 200 and is prevented from rotating by the anti-rotation section 246 (e.g., hexagonally shaped section) at the proximal end of the sleeve. In this "timed" fashion, the shaft 210 is held axially stationary while the sleeve 112 is axially moved via the threading action and as such pulls the collet body 118 over the shaft to open the legs 224 or pushes the legs off the end of the shaft to close the legs when the fastener transitions between different configurations. Additionally, in a clamping direction, once the sleeve 112 has been threadingly urged toward the proximal end of the fastener and the legs 224 have opened around the shaft 210, the pin 212 holding the shaft stationary then bottoms out in the distal end of the slots 214 in the sleeve, as illustrated in FIG. 8. Once the pin 212 has bottomed out, further axial translation of the sleeve 113 (caused by threading the drive screw 200 into the sleeve 112) will force the pin off of the spacer 208 while compressing the spring 206. Therefore, the pin 212 is now axially linked (by spring force) to the bottom of the slots 214 in the sleeve 112 and as such the shaft 210 is now also linked to the axially location of the sleeve and in this way maintains a constant distal distance from the end of the fastener to the distal side of the work piece. The fastener's sequential transition into and out of the different configurations is expanded upon herein with regard to at least FIGS. 4-10C.

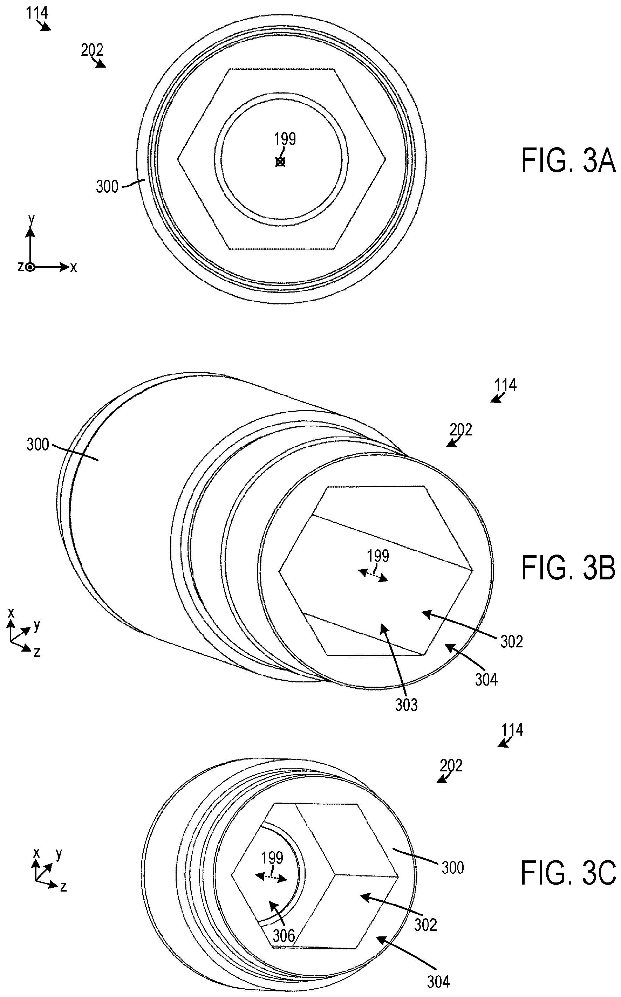

Continuing with FIG. 2, the spacer 208 functions to axially delimit a lower side of the pin 212 and an upper side of the pin is axially delimited by a lower end 250 of the spring 206. Additionally, the spacer 208 mates with a bore 302, shown in FIGS. 3A-3C, of the housing 114. To elaborate, the spacer 208 may not interact with a hole 251 (shown in FIG. 2) at the distal end of the housing 114 but rather interacts with an edge above the hole 251 and the internal sides of the housing. However, other structural interactions between the spacer and the housing have been contemplated. Additionally, the cap 108 is further shown in FIG. 2. When assembled, the cap 108 may mate with an opening 252 in the sleeve 112 such that it is removably coupled thereto.

Washers may be positioned on opposing axial sides of the flange 256 of the drive head 116. The washers may allow the drive nut to more smoothly rotate. However, other fastener constructions may be used in other examples. For instance, the washers may be omitted from the fastener, in other examples.

As illustrated in FIG. 2, the housing 114 includes a surface 258 that functions as a proximal clamping surface in the fastener. However, the proximal clamping surface may be positioned in another suitable location and/or component in the fastener, in alternate examples.

Additionally, while the fastener 100 is in the clamping configuration, the body assembly 110 is configured to adjust an axial length between the proximal clamping surface 258 and the distal clamping surface 228 while an axial length between the distal clamping surfaces 228 and a distal end 106 of the fastener remains constant. In this way, the axial distance between the end of the shaft and the clamping legs does not grow as the fastener approaches its minimum grip length. Consequently, the fastener may be installed in tighter spaces than other fasteners, thereby expanding the fastener's applicability.

FIGS. 3A-3C show different perspective views of the lower section 202 of the housing 114. The lower housing section 202 includes an outer wall 300 and an internal bore 302 with an upper opening 304 and a lower opening 306. It will be understood that the internal bore 302 includes an anti-rotation section 303. The upper opening 304 is sized to receive the anti-rotation section 246 of the sleeve 112, shown in FIG. 2. The lower opening 306 and a section of the internal bore 302 have a polygonal cross-section which mates with the anti-rotation section 246 of the sleeve 112, shown in FIG. 2. In this way, the housing 114 and the sleeve 112 interact to substantially prevent rotation of the sleeve with regard to the housing but enable axial translation of the sleeve within the housing.

FIG. 4 shows a side view of the fastener 100 with the sleeve 112, the housing 114, the drive head 116, and the cap 108 that couples to the distal end 400 of the sleeve. The sleeve 112 is shown with clamping feet openings 234 and clamping feet 226 of the collet body 118 mated therewith. Cutting plane A-A' indicates the cross-sectional views depicted in FIG 5 and FIGS. 6A-6C. Further, the other cross-sectional views in FIGS. 8, 10, and 11A-11C of the fastener 100 are additionally taken along cutting plane A-A' but it will be appreciated that the components in the fastener are arranged in different clamping configurations depicted in FIGS. 8, 10, and 11A-11C.

FIG. 5 shows a cross-sectional view of the fastener 100. The drive head 116 coupled to the drive screw 200 is again illustrated. The flange 256 of the drive head 116 which is positioned in the housing 114 may be axially constrained by the upper and lower housing portions 202 and 204 that, when assembled, may create a gap slightly larger than the flange 256, and in some cases the washers 500 which are optionally included in the fastener. Further, the drive head 116 is shown fixedly attached to the drive screw 200 via an interface 501 such that the drive head 116 and the drive screw rotate in unison. To elaborate, attachment techniques between the drive head 116 and the drive screw 200 may be used such as mechanical swaging, threading, interference fitting, welding, adhesively bonding (e.g., gluing), combinations thereof, and the like.

The sleeve 112 is mated with the central bore 302 of the housing 114. To elaborate, the anti-rotation section 246 of the sleeve 112 mates with the anti-rotation section of the housing bore 302. As indicated above, the anti-rotation sections may have corresponding polygonal cross-sectional contours or other cooperating shapes to achieve the anti-rotation functionality.

A threaded interior section 502 of the sleeve 112 is shown engaged with the threads 504 on the screw 200. As shown, the threads on the screw 200 extend to the screw's distal end 506. However, in other examples, the screw may include an unthreaded section (and/or reduced diameter section) at a distal end or positioned between two threaded sections. The location of the unthreaded or reduced diameter section of the screw may be selected to enable the threads in the screw to engage and disengage when desired. As such, the unthreaded section of the screw may be located in a variety of positions.

Additionally, the fastener 100 may be designed with free-spin functionality which allows the screw 200 to unthread from the sleeve 112 and freely rotate when the drive head 116 is further rotated in the direction that transitions the fastener from the clamping configuration to the insertion and removal configuration. Designing the fastener with free-spin functionality allows the fastener to avoid degradation caused by over-torqueing in the removal direction and allows automated tooling machines (e.g., robotic machines) to effectively identify when the fastener transitions into the free-spin state. In this way, automated manufacturing processes using the fastener can be enhanced, if wanted.

Section 510 indicates the boundary of the detailed view in FIG. 6A, section 512 indicates the boundary of the detailed view in FIG. 6B, and section 514 indicates the boundary of the detailed view in FIG. 6C.

FIG. 5 shows the pin 212 mated with the opening 216 in the shaft 210 and the slots 214 in the sleeve 112. Further, the collet body 118 is shown positioned within the sleeve 112, with the clamping feet 226 mated with the foot openings 234 in the sleeve. The legs 224 of the collet body 118 are shown in their neutral state which is bent inward towards the central axis 199. In one specific example, the collet body may be constructed from memory material. However, other collet body configurations have been contemplated. The collet body 118 is also shown positioned above the cap 108.

Further, the spring 206 is shown compressed in FIG. 6B. To elaborate, the spring 206 is axially delimited on a bottom side via the pin 212 and on a top side via a ledge 508 (shown in FIG. 5) formed on the sleeve 112 between the anti-rotation section 246 and the middle section 244 of the sleeve 112. Thus, the spring 206 may be in contact with the pin 212. As such, the spring 206 exerts an axial separating force on the sleeve 112 and the pin 212, when compressed. Further, the sleeve 112 is delimited by the cooperation of the threaded interior section 502 of the sleeve 112 and threads 504 of the drive screw 200. Further still, the pin 212 is delimited by the contact with the spacer 208 which is cooperatively held in place by the bore 302 of lower section 202 of the housing 114, shown in FIG. 3B. In this way, in the insertion and removal configuration, the pin 212 is held against the proximal end of the spacer 208 and the sleeve 112 is held against (e.g., via threaded engagement) the distal end of the drive screw 200.

In one configuration, the spring force of the spring 206 is greater than the resistance of the collet legs 224 to being opened. In another configuration, the pin 212 is held tight against the spacer 208 and does not contact the distal sides 220 of the slots 214 of the sleeve 112 until the collet legs 224 are fully opened and the clamping feet 226 of the collet body 118 are fully extended through openings 234 of sleeve 112. FIG. 8 shows the collet legs and clamping feet of the collet body 118 in their expanded, ready for clamping, configuration. In this way, the sleeve 112 axially translates with respect to the shaft 210 until the clamping feet 226 of the collet body 118 are fully expanded.

FIG. 6A shows the screw 200 engaging with threads 600 in the sleeve 112 and forming a threaded interface 602. It will be understood, that as the screw 200 is threaded further into the sleeve 112, the sleeve is drawn upwards toward the drive head 116, shown in FIG. 5. Conversely, when the screw 200 is unthreaded from the sleeve 112, the fastener 100 is transitioned into a free-spin configuration. However, the free-spin functionality may be omitted from the fastener, in alternate examples.

FIG. 6B shows the upper section 204 and the lower section 202 of the housing 114 mated with one another. However, additional or alternate coupling techniques for the housing sections have been contemplated.

FIG. 6B shows a section of the body assembly 110 with the pin 212 that extends through the opening 216 in the shaft 210 and the axially extending slots 214 in the sleeve 112. The pin 212, and particularly the axial ends of the pin, is additionally shown axially positioned between the spacer 208 and the spring 206. Further, the pin 212 is shown positioned near the proximal sides 218 of the slots 214 but not in direct contact with a proximal surface 604 of the slots. In other words, the pins 212 may have a clearance between the proximal surface 604 of the slots 214 to enable the fastener to transition into the free-spin configuration.

FIG. 6C shows the collet body 118, the distal end 606 of the shaft 210, and the sleeve 112 with the clamping feet openings 234, and the clamping feet 226 mated with the openings.

The legs 224 of the collet body 118 are shown bent inward, in their neutral position. A portion of the shaft 210 is shown positioned between the legs 224 but not radially expanding the legs, in FIG. 6C. Further, the crown 222 of the collet body 118 is shown positioned proximally to the collet body clamping feet 226. However, in alternate designs, the collet body crown may be positioned distal of the clamping feet so that the collet body is effectively reversed in position but the shaft still opens the legs and extends the clamping feet and the crown remains positioned within the inner bore of the sleeve above the cap (e.g., the end cap). The cap 108 is further shown coupled to (e.g., mated with) the lower opening 252 of the sleeve 112.

FIG. 7 shows a perspective view of the fastener 100 which has been transitioned into a clamping configuration (and specifically a ready to be clamped configuration) from the insertion and removal configuration. In this way, the fastener's configuration is changed in anticipation of subsequent workpiece clamping. As indicated above, the clamping configuration may encompass a first state where the fastener is readied for clamping, referred to as a ready to be clamped configuration, and a second state where the fastener is physically clamping workpieces, referred to as a clamped configuration.

In the ready to be clamped configuration, the clamping feet 226 radially protrude further outward from the clamping feet openings 234. The distal clamping surfaces 228 of the fastener formed in the clamping feet 226 and the proximal clamping surface 258 formed in the housing 114 are illustrated in FIG. 7. These clamping surfaces are spaced away from the workpieces 102 and 104. However, it will be understood, that the grip length of the fastener can be decreased to clamp the workpieces. Rotation of the drive head 116 induces adjustment of a grip length of the fastener 100. For instance, rotation of the drive head in a first direction decreases fastener grip length while the fastener is in the ready to be clamped configuration and rotation in a second direction, opposing the first direction, increases fastener grip length. The grip length is the axial distance between the proximal clamping surface 258 and the distal clamping surfaces 228. As such, the fastener's grip length may be varied in the ready to be clamped configuration to accommodate workpiece stacks with a variety of thicknesses. Although the proximal clamping surface is illustrated as a single continuous surface, it will be understood that in alternate examples, the fastener may include multiple proximal clamping surfaces.

FIG. 8 shows a cross-sectional view of fastener 100 in the ready to be clamping configuration which has been inserted into the workpiece stack formed via workpieces 102 and 104, prior to clamping the stack. To place the fastener in the clamping configuration, the drive head 116 is rotated to drive rotation of the screw 200 and pull the sleeve 112 axially upward. Movement of the sleeve upward, moves the pin 212, the shaft 210, and collet body 118 in equally

As shown in FIG. 8, the clamping legs 224 are expanded by the shaft 210 such that the feet 226 protrude out of the clamping feet openings 234 and the surfaces 228 of the feet are ready for workpiece clamping.

FIG. 8 further shows the under surfaces 232 (e.g., distal surface) of the clamping feet 226 contacting the lower surface 238 (e.g., distal surface) of the clamping feet openings 234. In this way, the loads through the fastener are directed to the sleeve 112 as opposed to the legs 224 of collet body 118, thereby allowing the load to be directed to a stronger component. Consequently, the fastener's durability is increased.

FIG. 8 shows an axial distance 850 between the distal clamping surfaces 228 (in the collet body 118) and the distal end 106 of the fastener 100 which is formed by the cap 108, in the illustrated example. However, in other examples, elaborated upon herein, the distal end of the fastener may forgo the cap 108 and simply terminate at the end of the fastener's shaft. While the fastener is maintained in the clamping configuration, the axial distance 850 remains constant. Further, while the fastener is maintained in the clamping configuration the grip length 852 (measured as the axial distance between the proximal clamping surface 258 and the distal clamping surfaces 228) can be adjusted to allow the fastener to clamp workpieces with different thicknesses. In this way, the fastener's grip length can be adjusted while the distance between the distal end of the fastener and the distal clamping arm remains constant to enable the fastener to be installed in more space constrained environments particularly when the fastener approaches its minimum grip length. As such, the fastener poses less of an impediment to manufacturing personnel who make use of the fastener in a manufacturing process.

Further, as shown in FIG. 8, the pin 212 continues to be held against the spacer 208 by the force of the spring 206 even as the sleeve 112 is threadably drawn towards the proximal end of the fastener 100 at the urging of drive screw 200 when the fastener is transitions from an insertion and removal configuration (e.g., ready to be installed configuration) to the ready-to-be-clamped configuration illustrated in FIG. 8. Specifically, in one example, the amount of axial compression of the spring 206 may be greater than a length of the slot 214, shown in FIG. 2, and the spring may also be strong enough to overcome the resistance of the legs being opened.

As shown in FIG. 8, the pin 212 remains held against the spacer 208 as the sleeve 112 is threadingly drawn proximally until the proximal end of the slot 214, shown in FIG. 2, contacts an outer surface of the pin 212. Once cooperation between the pin 212 and the proximal end of the slot is established, further axial translation toward the proximal end of the fastener by the sleeve 112 may result in an equal axial translation of the pin 212 while also stopping any further expansion of the spring 206. The spring may be still somewhat compressed but to a lesser extent when compared to the fastener in the insertion and removal configuration. In this way, the pin 212 may be held tightly against the spacer 208 during the initial axial translation in a proximal direction of sleeve 112 as determined by the distance between the distal and proximal ends of the slot 214.

Further, since the collet body 118 is linked to the sleeve 112 via the cooperation of clamping feet 226 and sleeve opening 234, and axial translation of the sleeve 112 is copied by the collet body 118. In this way, as the shaft 210 is held in position axially the sleeve axially translates towards the proximal end and continues to do so even as the legs 224 of the collet body contact the shaft 210 and are eventually opened by the further axial translation of sleeve 112 with respect to stationary shaft 210, as depicted in FIG. 8. Further, in clamping configuration of the fastener, the spring 206 remains holding the pin 212 in place and may be designed with a spring constant to maintain the spring holding the pin in place even though there has been enough sleeve axial motion to force the legs 224 up and over the shaft 210.

Further, in one configuration, the pin 212 may only contact distal sides 220 of slot 214 of sleeve 112 and thus become axially linked only after the clamping feet 226 are fully extended. In this way, the fastener can translate from the insertion and removal configuration (e.g., the ready to be installed configuration), shown in FIG. 5, to a clamping configuration (e.g., a ready to clamp configuration), shown in FIG. 8, position where the clamping feet 226 of the collet body 118 are expanded. Further still, once the pin 212 has contacted sides 220 of the slots 214 of the sleeve 112, as shown in FIG. 8, the shaft 210, the collet body 118, and the sleeve 112 axially translate together and in doing so maintain a constant distance between clamping feet and distal end of fastener through the transition of the fastener from a maximum clamping distance to a minimum clamping distance. Reversing the torque and rotation direction of the drive head 116 to transition from the clamping configuration (e.g., the ready to clamp configuration) to the insertion and removal configuration (e.g., the ready to be removed configuration) reverses the aforementioned steps.

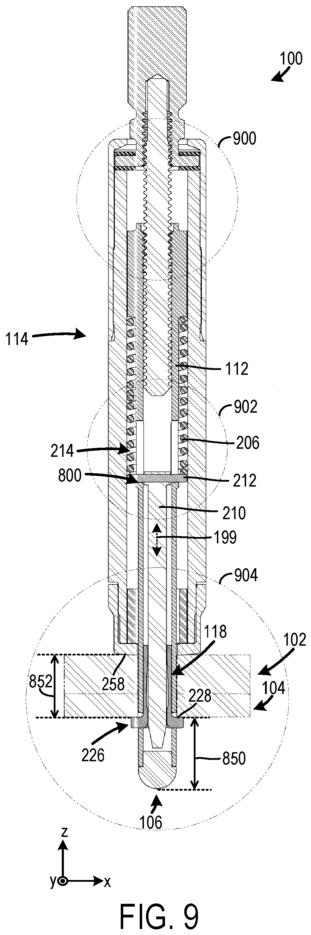

FIG. 9 shows a cross-sectional view of the fastener 100 which is clamping workpieces 102 and 104 and therefore again in a clamping configuration. To elaborate, the distal clamping surfaces 228 formed in the clamping feet 226 and the proximal clamping surface 258 formed in the housing 114 exert a clamping force on the workpiece stack. Thus, the proximal and distal clamping surfaces conceptually function as clamping arms.

The fasteners described herein are designed with axially clamping functionality. As such, the clamping forces are in axial directions as opposed to wedge type fasteners that exert damaging radially outward forces in addition to axial forces on the workpiece to secure the workpieces in a desired position.

FIG. 9 shows the pin 212, the shaft 210, and the sleeve 112 each drawn further upward in the housing 114 to decrease the fastener's grip length and clamp the workpieces 102 and 104. To elaborate, to place the fastener in the clamping configuration shown in FIG. 9, the drive head 116 is rotated to drive rotation of the screw 200 and pull the sleeve 112 axially upward. As previously indicated, movement of the sleeve upward, moves the pin 212 upward while it is in contact with the distal sides 220 (e.g., distal ends) of the axially extending slots 214. To elaborate, the movement of the pin 212 is caused by rotation of the screw 200 and decompression of the spring 206 which moves the sleeve 112 upward while the pin 212 moves upward along with the shaft 210 and the collet body 118, correspondingly.

FIG. 9 shows that the axial distance 850 between the distal end 106 of the fastener 100 and the distal clamping surfaces 228 remains unchanged when compared to the clamping configuration of the fastener shown in FIG. 8. However, the grip length 852 of the fastener 100 has been decreased when compared to the clamping configuration of the fastener shown in FIG. 8. Maintaining a constant axial distance between the distal clamping arm and the distal end of the fastener allows the fastener to be installed in space constrained environments, thereby increasing the fastener's appeal and applicability.

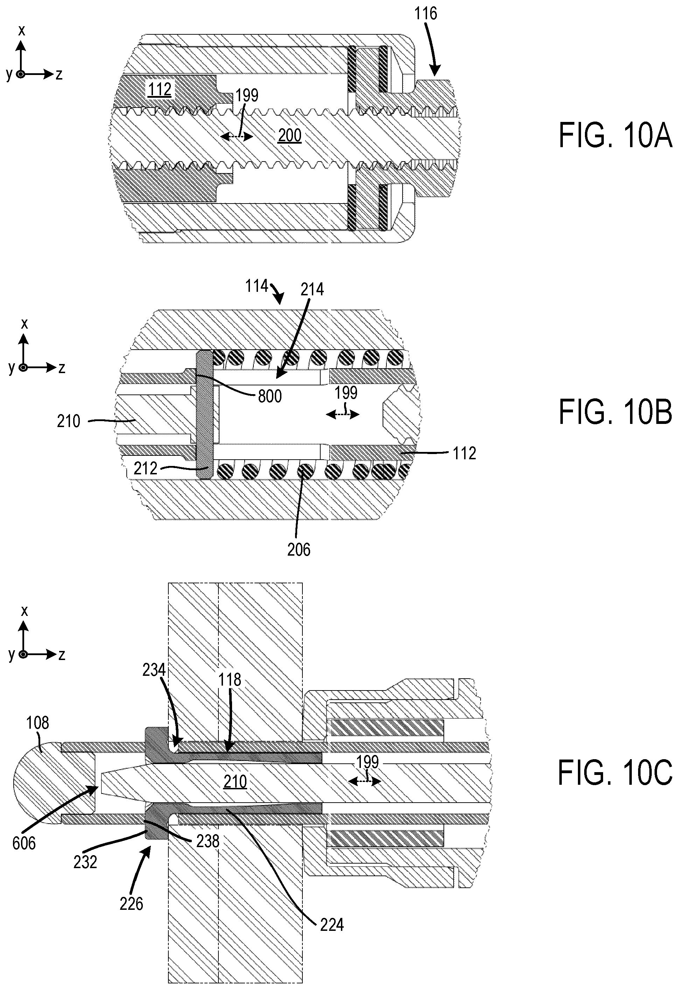

Section 900 indicates the boundary of the detailed view in FIG. 10A, section 902 indicates the boundary of the detailed view in FIG. 10B, and section 904 indicates the boundary of the detailed view in FIG. 10C.

FIG. 10A shows the screw 200 threaded further into the sleeve 112 such that the sleeve is drawn upward. As previously discussed, the drive head 116 is rotated to induce screw rotation.

FIG. 10B shows the pin 212, the shaft 210, and the sleeve 112 drawn further upward into the housing 114, while the pin continues to remain in contact with the distal sides 220 of the slots 214. It will be appreciated that the spring 206 enables this bottoming out functionality and the more generally the transition between the insertion and removal configuration and the clamping configuration.

FIG. 10C shows the clamping feet 226 and the legs 224 of the collet body 118 pushed radially outward via the shaft 210. The under surfaces 232 of the clamping feet 226 are in contact with lower surfaces 238 of the clamping feet openings 234. In this way, the loads through the fastener are directed to the drive sleeve as opposed to the collet body during fastener clamping, as previously indicated. Therefore, loads are redirected through a stronger component, thereby increasing the load carrying capacity of the fastener, and decreasing the chance of fastener degradation during clamping.

FIG. 10C further shows the distal end 606 of the shaft 210 spaced away from the cap 108. However, in other examples the shaft may bottom out on the cap as opposed to the lower end of the axially extending slots 214, shown in FIG. 10B. In this alternate example, the lengths of the slots may be elongated to allows the shaft to bottom out on the cap. Further still in other examples, the cap may be omitted and in such an example, the pin bottoms out on the end of the slots, as described above.

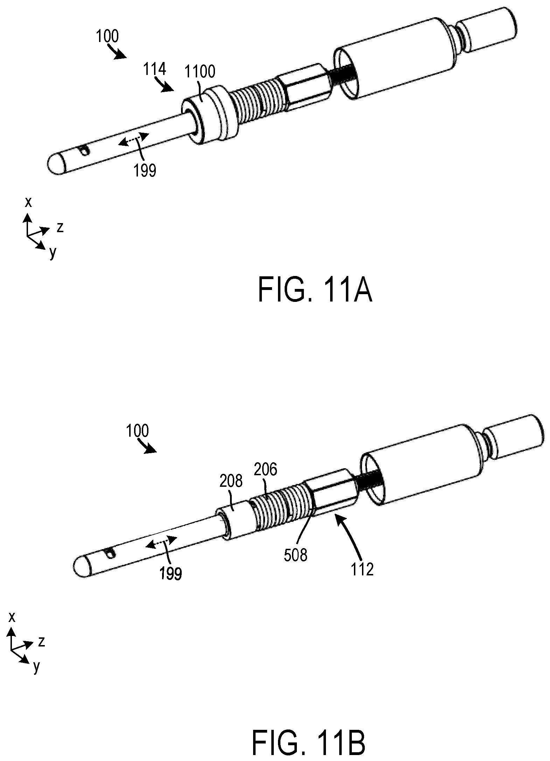

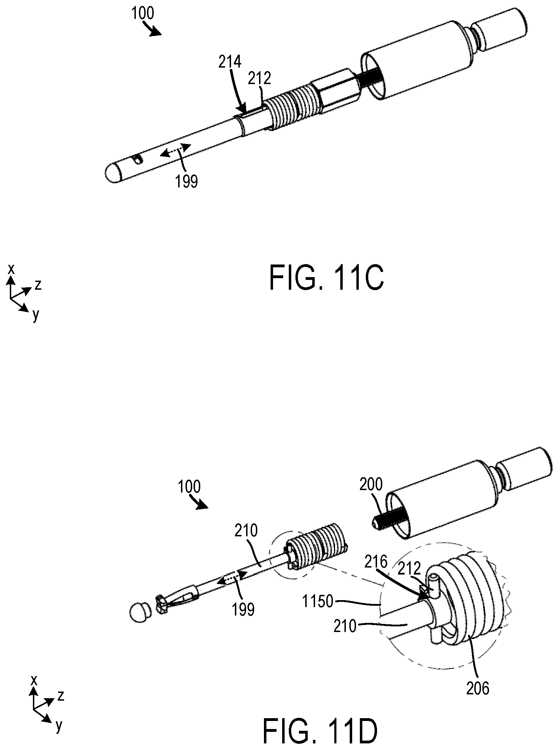

FIGS. 11A-11D show the fastener 100 in various stages of disassembly, to reveal internal componentry. As shown, in FIG. 11A, a section 1100 of the housing 114 encloses the spacer 208, shown in FIG. 11B. As shown in FIG. 11B, the spring 206 is axially delimited by the spacer 208 and the ledge 508 in the sleeve 112. However, other fastener configurations are possible. Further, the spacer 208 shown in FIG. 11B at least partially circumferentially encloses the pin 212 and the slots 214, shown in FIG. 11C. FIG. 11D shows an enlarged view 1150 of the pin 212 that mates with the opening 216 in the shaft 210 and axially delimits the lower side of the spring 206. FIG. 11D further shows the shaft 210 spaced away from the screw 200.

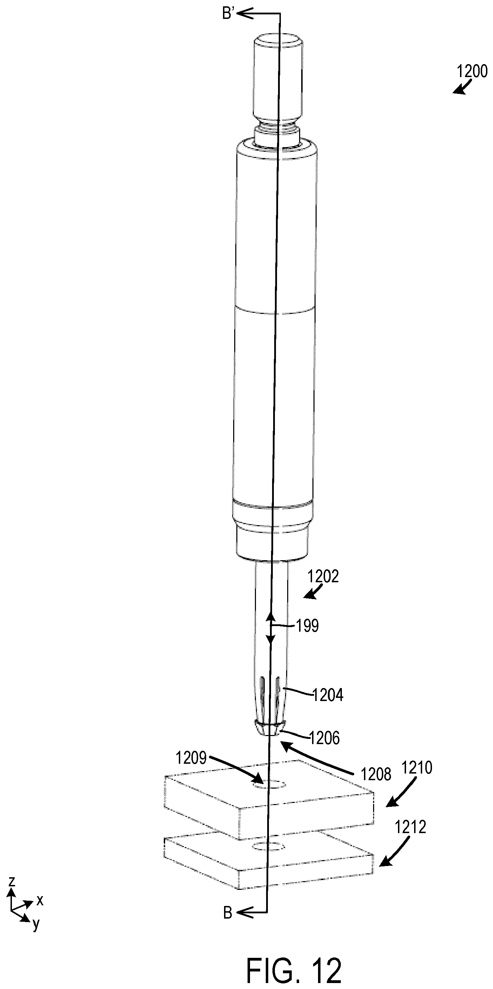

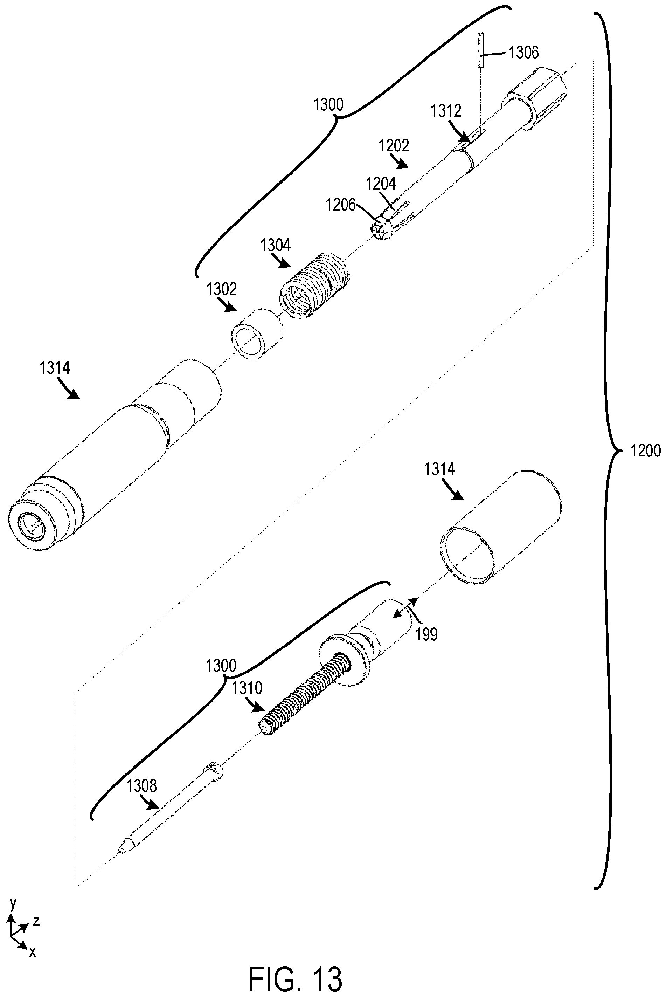

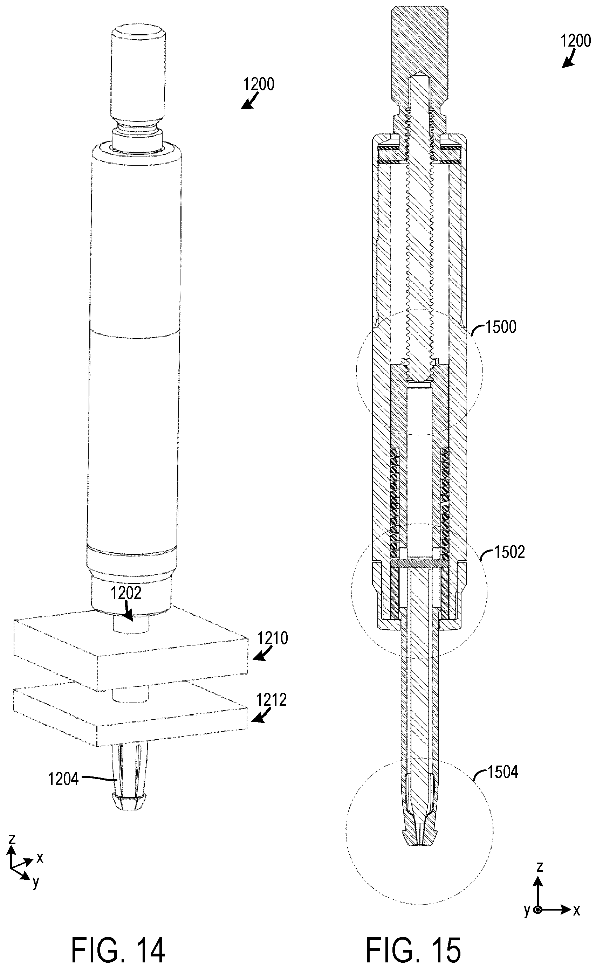

FIG. 12 shows another example of a fastener 1200. The fastener 1200 shown in FIG. 12 and the fastener 100 shown in FIG. 1 share at least some similar structural and functional features and redundant description of these overlapping features is omitted for brevity. However, the fastener 1200 shown in FIG. 12 includes a sleeve 1202 with clamping legs 1204 that each include clamping feet 1206. As such, the separate collet body is omitted from the fastener 1200 and the collet body features (i.e., bendable legs with clamping feet) are incorporated into the sleeve 1202. Cutting plane B-B' which is depicted in FIG. 13 denotes the cross-sectional view illustrated in FIGS. 15, 16A-16C, 18, 19A-19C, 21, and 22A-22C, although it will be understood that the fasteners have varying configurations among these figures.

As illustrated the clamping legs 1204 are positioned at a distal end 1208 of the sleeve 1202. Further, the fastener 1200 is in the insertion and removal configuration in FIG. 12 which can be inserted through openings 1209 in the workpieces 1210 and 1212.

FIG. 13 shows an exploded view of the fastener 1200 which again includes a body assembly 1300. The body assembly 1300 again includes a component 1302 (e.g., a cylindrical component), a spring 1304, the sleeve 1202, a pin 1306, a shaft 1308, and a screw 1310. Components in the body assembly 1300 are similar in function and structure to the body assembly 110 in the fastener 100 discussed above with regard to FIGS. 1-11D aside from the sleeve 1202. To elaborate, the sleeve 1202 at a lower end includes the clamping legs 1204 with clamping feet 1206. However, the upper portion of the sleeve 1202 again includes axially extending slots 1312. A housing 1314 is further shown in FIG. 13.

FIG. 14 shows the fastener 1200 in an insertion and removal configuration where the legs 1204 of the sleeve 1202 are bent inward and inserted through the workpiece stack formed via workpieces 1210 and 1212.

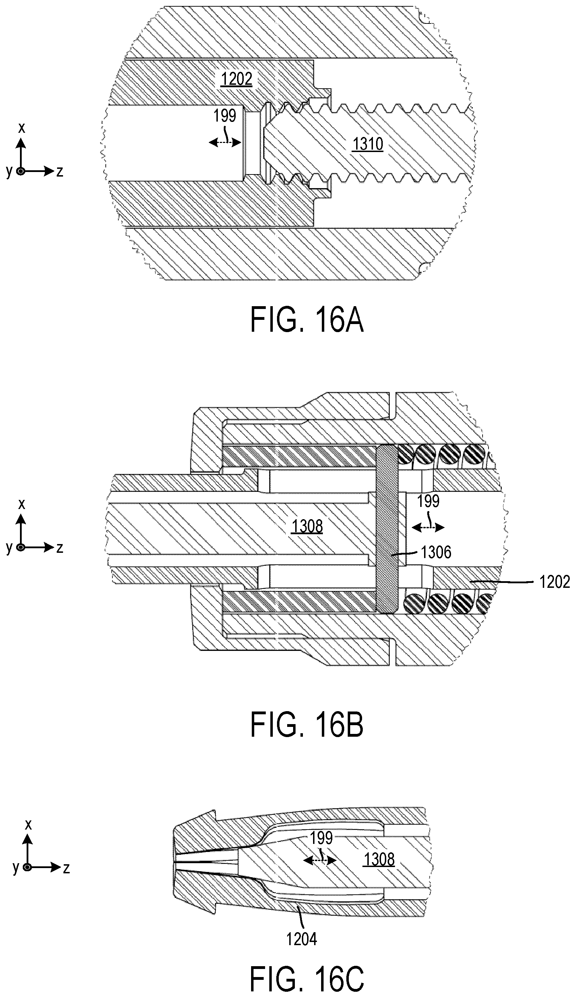

FIG. 15 shows a cross-sectional view of the fastener 1200 in an insertion and removal configuration. Section 1500 indicates the boundary of the detailed view in FIG. 16A, section 1502 indicates the boundary of the detailed view in FIG. 16B, and section 1504 indicates the boundary of the detailed view in FIG. 16C.

FIG. 16A shows the screw 1310 threaded into the sleeve 1202. FIG. 16B shows the pin 1306 mated with the sleeve 1202 and the shaft 1308. FIG. 16C shows the shaft 1308 positioned between the collet body legs 1204 but not radially expanding the legs.

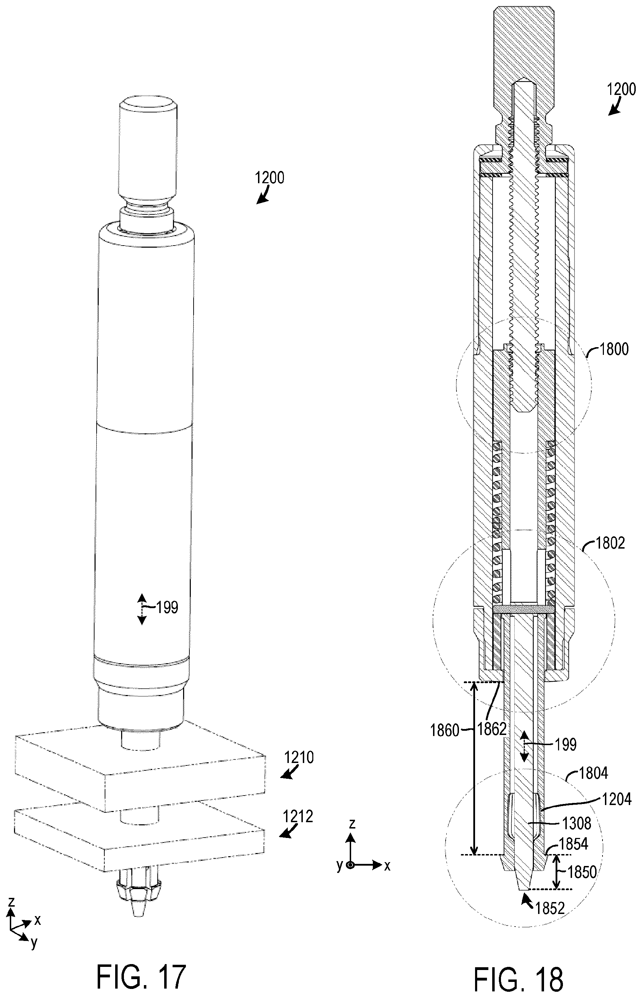

FIG. 17 shows the fastener 1200 in a clamping configuration which has been inserted into workpieces 1210 and 1212. FIG. 18 shows a cross-sectional view of the fastener 1200 in a clamping configuration. In the clamping configuration the shaft 1308 axially translates downward and expands the legs 1204. FIG. 18 further shows an axial distance 1850 between a distal end 1852 of the fastener 1200 and the distal clamping surfaces 1854. Further, the fastener's grip length 1860 (i.e., the axial distance between the proximal clamping surface 1862 and the distal clamping surfaces 1854) is additionally depicted in FIG. 18.

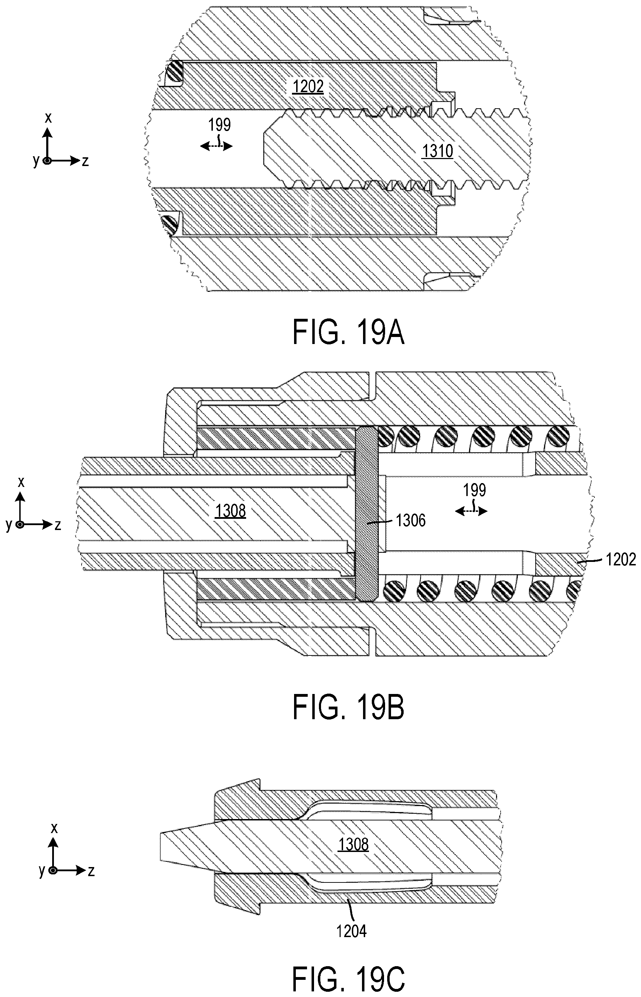

Section 1800 indicates the boundary of the detailed view in FIG. 19A, section 1802 indicates the boundary of the detailed view in FIG. 19B, and section 1804 indicates the boundary of the detailed view in FIG. 19C.

FIG. 19A shows the screw 1310 further threaded into the sleeve 1202. FIG. 19B shows the pin 1306 which has moved downward with regard to the sleeve 1202 to place the fastener in the clamping configuration by moving a portion of the shaft 1308 between the legs 1204 to radially expand the legs and ready the fastener for clamping, as shown in FIG. 19C.

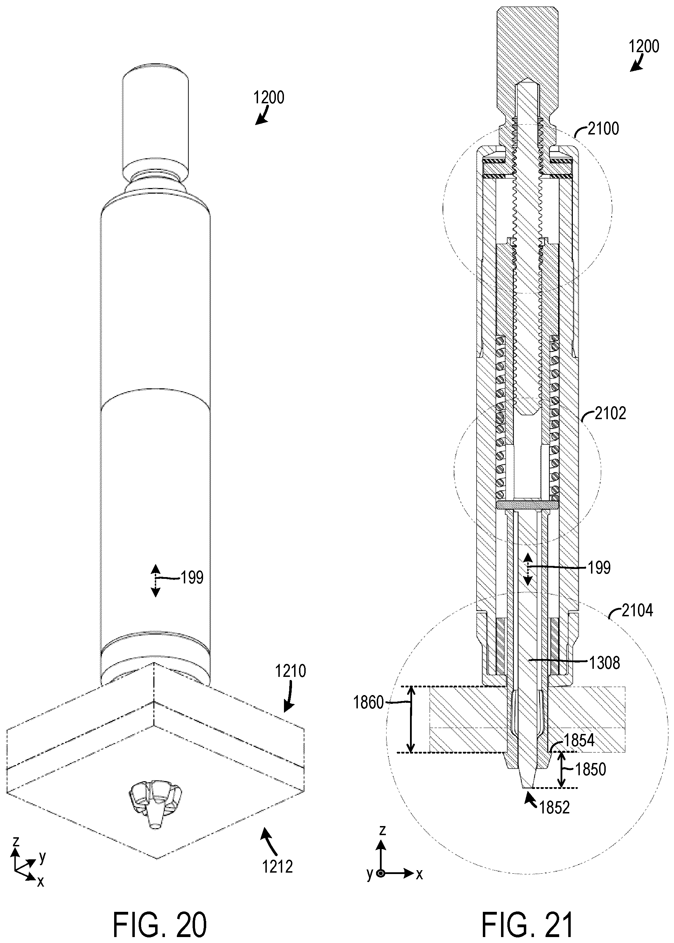

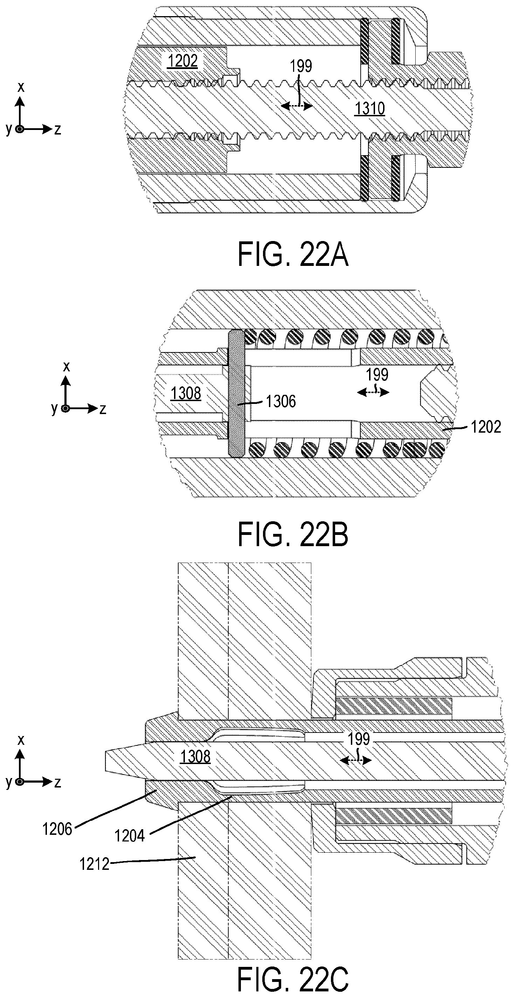

FIG. 20 shows the fastener 1200 in a clamping configuration which clamps workpieces 1210 and 1212. FIG. 21 shows a cross-sectional of the fastener 1200 depicted in FIG. 20. Section 2100 indicates the boundary of the detailed view in FIG. 22A, section 2102 indicates the boundary of the detailed view in FIG. 22B, and section 2104 indicates the boundary of the detailed view in FIG. 22C.

FIG. 21 shows the fastener 1200 in another clamping configuration where the grip length 1860 has been further decreased. However, as the grip length is decreased, the axial distance 1850 between the distal end 1852 of the fastener 1200 which in this case is the distal end of the shaft 1308 and the distal clamping surfaces 1854 remains substantially constant. In this way, the fastener may be installed in more space constrained environments, thereby increasing the applicability of the fastener.

FIGS. 22A shows the screw 1310 threaded further into the sleeve 1202. FIG. 22B shows the pin 1306, the shaft 1308, and the sleeve 1202 which have been move upward. FIG. 22C shows the shaft 1308 expanding the clamping legs 1204 with the feet 1206 in contact with the workpiece 1212.

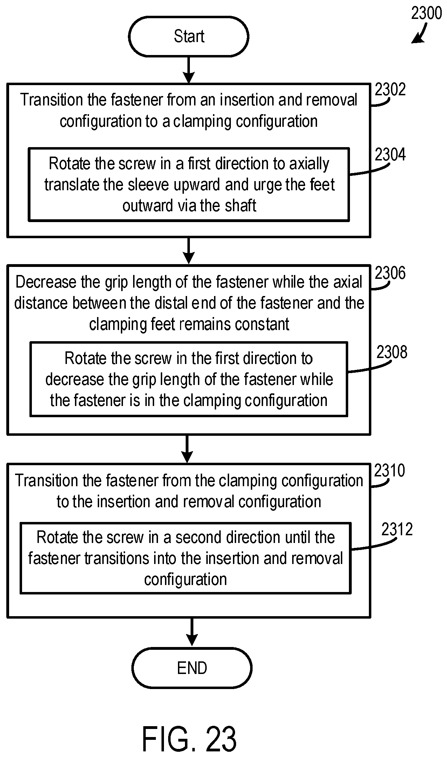

FIG. 23 shows a method 2300 for operating a fastener. The method may be implemented by any of the fasteners and tooling apparatuses or combinations of the fasteners and tooling apparatuses described above with regard to FIGS. 1-22C. However, in other examples, the method may be implemented by other suitable fastener systems and/or tooling apparatuses.

Still further, at least a portion of the method steps may be manually implemented via manufacturing personnel, in some instances.

At 2302, the method includes transitioning the fastener from the insertion and removal configuration to the clamping configuration. Implementing the transition between the insertion and removal configuration to the clamping configuration includes at 2304 rotating the screw in a first direction to axially translate the sleeve upward and urge the feet outward via the shaft. As previously discussed, when this transition occurs, the axial position of the pin moves downward toward the axially extending slots. For instance, the pin may bottom out in the slots, in one example. Alternatively, the shaft may bottom out on the rounded end cap, in the embodiment of the fastener with the collet body.

Next at 2306 the method includes decreasing the grip length of the fastener while the axial distance between the distal end of the fastener and the clamping feet remains constant. Decreasing the grip length includes at 2308, rotating the screw in the first direction to decrease the grip length of the fastener while the fastener is in the clamping configuration.

Next at 2310, the method includes transitioning the fastener from the clamping configuration to the insertion and removal configuration which includes at 2312 rotating the screw in a second direction (opposite the first direction) until the fastener transitions into the insertion and removal configuration. Method 2300 allows the fastener to be efficiently transitioned between the unclamped and clamping configuration and while in the clamping configuration allows the fastener to maintain a constant distance between the distal end of the fastener and the clamping feet. As a result, the fastener may be installed in more space constrained environments, thereby expanding the fastener's applicability.

The technical effect of the fastener operating methods described herein is to allow the fastener to more space efficiently manage the distance between the distal end of the fastener and the clamping feet during clamping.

FIGS. 1-22C are drawn approximately to scale, aside from the schematically depicted components. However, other relative component dimensions may be used, in other embodiments.

FIGS. 1-22C show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. An elements inner and outer diameter may be referred to as such. Further an element with a smaller or greater diameter than another element may be referred to as such.

The invention will further be described in the following paragraphs. In one aspect, a fastener is provided that comprises a body assembly configured to: transition the fastener between a clamping configuration and an insertion and removal configuration; and in the clamping configuration, adjust an axial length between a proximal clamping surface and a distal clamping surface while an axial length between the distal clamping surface and a distal end of the fastener remains constant; wherein the body assembly includes a shaft that is axially spaced away from a drive screw.

In another aspect, a method for operating a fastener is provided that comprises transitioning the fastener between an insertion and removal configuration and a clamping configuration; and adjusting a grip length between a proximal clamping surface and a distal clamping surface while an axial length between the distal clamping surface and a distal end of the fastener remains constant; wherein the body assembly includes a pin that extends through an opening in a shaft and multiple axially extending slots in a sleeve.

In yet another aspect, a fastener is provided that comprises a body assembly including: a sleeve positioned within a housing; a drive screw rotationally coupled to the sleeve; a shaft axially spaced away from the drive screw; a pin extending through multiple axially extending slots in the sleeve and an opening in the shaft; wherein when the fastener is in a clamping configuration, the body assembly is configured to adjust an axially length between a proximal clamping surface and a distal clamping surface while an axial length between the distal clamping surface and a distal end of the fastener remains constant.

In any of the aspects or combinations of the aspects, the body assembly may include a pin that is mated with multiple axially extending slots in a sleeve and an opening in the shaft.

In any of the aspects or combinations of the aspects, the axial position of the pin in the multiple axially extending slots may vary when the fastener transitions between the clamping configuration and the insertion and removal configuration; and the axial position of the pin in the multiple axially extending slots remains constant while the fastener is in the clamping configuration and the axial length between the upper and the distal clamping surfaces are adjusted.

In any of the aspects or combinations of the aspects, when the fastener is in the clamping configuration: a distal end of the shaft contacts a cap that may be coupled to a lower opening of the sleeve; or the pin may contact distal axial sides of the multiple axially extending slots.

In any of the aspects or combinations of the aspects, wherein the body assembly may include: a sleeve with a plurality of clamping feet openings; and a collet body with a plurality of legs that extend from a crown and each include a clamping foot and wherein the plurality of clamping feet extend through the plurality of clamping feet openings.

In any of the aspects or combinations of the aspects, when the fastener is in the clamping configuration, a surface of the clamping feet may be in contact with a surface of the clamping feet openings and transfers loads thereto.

In any of the aspects or combinations of the aspects, the body assembly may include a round cap coupled to a lower opening of the sleeve and wherein the round cap forms the distal end of the fastener.

In any of the aspects or combinations of the aspects, a crown of the collet body may be positioned distal from the plurality of clamping feet.

In any of the aspects or combinations of the aspects, when the fastener transitions between the insertion and removal configuration and the clamping configuration the axial position of the pin within the multiple axially extending slots may vary.

In any of the aspects or combinations of the aspects, when the fastener in in the clamping configuration, the pin may bottom out at the distal axial sides of the multiple axially extending slots.

In any of the aspects or combinations of the aspects, when the fastener in in the clamping configuration, a distal end of the shaft may bottom out on a cap that is coupled to a distal opening of the sleeve.

In any of the aspects or combinations of the aspects, the fastener may include a drive head coupled to the screw and configured to drive rotation of the screw while its axially position remains constant.

In any of the aspects or combinations of the aspects, the body assembly may include a sleeve with a plurality of clamping feet openings; or a sleeve with a plurality of clamping feet at a lower side.

In any of the aspects or combinations of the aspects, the body assembly may include a round cap coupled to a lower opening of a sleeve and wherein the round cap forms the distal end of the fastener.

In any of the aspects or combinations of the aspects, the body assembly may include: a shaft that is axially spaced away from a drive screw; and a polygonal section that mates with a polygonal opening in the housing.

In any of the aspects or combinations of the aspects, the fastener may further include a drive head configured to rotate the screw while its axial position remains constant.

In another representation, a blind side fastener is provided that includes a grip length adjustment assembly configured to alter the grip length of the fastener, in a clamped state, while a lower end of the fastener remains in a constant axial position in relation to the distal clamping arm.

In another representation, a blind side fastener is provided that includes a pin which mates with a slot in the sleeve and a shaft such that the fastener is configured to transition into and out of a clamped and unclamped state and while in the unclamped state sustain a constant distance between the distal tip of the fastener and distal clamping arms.

Note that the example control and estimation routines included herein can be used with various fastener configurations. The control methods and routines disclosed herein may be stored as executable instructions in non-transitory memory and may be carried out by a tooling apparatus.

The specific routines described herein may represent one or more of any number of processing strategies such as event-driven, interrupt-driven, multi-tasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations and/or functions may be repeatedly performed depending on the particular strategy being used. Further, the described actions, operations and/or functions may graphically represent code to be programmed into non-transitory memory of the computer readable storage medium in the fastener and/or tooling apparatus, where the described actions are carried out by executing the instructions in a tooling apparatus and a fastener including the various components.

It will be appreciated that the configurations and routines disclosed herein are exemplary in nature, and that these specific embodiments are not to be considered in a limiting sense, because numerous variations are possible. For example, the above technology can be applied to a broad range of manufacturing fields such as the aerospace industry, the construction industry, the maritime industry, etc. The subject matter of the present disclosure includes all novel and non-obvious combinations and sub-combinations of the various systems and configurations, and other features, functions, and/or properties disclosed herein, as long as they fall within the scope of the appended claims.

The following claims particularly point out certain combinations and sub-combinations regarded as novel and non-obvious.

## Claims

1. A fastener (100), comprising:
a body assembly (110) configured to:
transition the fastener (100) between a clamping configuration and an insertion and removal configuration; and
in the clamping configuration, adjust an axial length between a proximal clamping surface (258) and a distal clamping surface (228) while an axial length between the distal clamping surface (228) and a distal end (106) of the fastener (100) remains constant;
wherein the body assembly (110) includes a shaft (210) that is axially spaced away from a drive screw (200) wherein the body assembly (110) includes:
a sleeve (112) with a plurality of clamping feet openings (234); and
a collet body (118) with one or more legs (224) that extend from a crown (222) and each include a clamping foot and wherein the clamping feet extend through the plurality of clamping feet openings (234); **characterized in that**
when the fastener (100) is in the clamping configuration, a surface of the clamping feet is in contact with a surface of the clamping feet openings (234) and transfers loads thereto.

2. The fastener (100) of claim 1, wherein the body assembly (110) includes a pin (212) that is mated with multiple axially extending slots (214) in a sleeve (112) and an opening (216) in the shaft (210).

3. The fastener (100) of claim 2, wherein:
an axial position of the pin (212) in the multiple axially extending slots (214) varies when the fastener (100) transitions between the clamping configuration and the insertion and removal configuration; and
the axial position of the pin (212) in the multiple axially extending slots (214) remains constant while the fastener (100) is in the clamping configuration and the axial length between the upper and the distal clamping surfaces (228) are adjusted.

4. The fastener (100) of claim 3, wherein when the fastener (100) is in the clamping configuration:
a distal end (606) of the shaft (210) contacts a cap (108) that is coupled to a lower opening of the sleeve (112); or
the pin (212) contacts distal axial sides of the multiple axially extending slots (214).

5. The fastener (100) of claim 1, wherein the body assembly (110) includes a round cap coupled to a lower opening of the sleeve (112) and wherein the round cap forms the distal end (106) of the fastener (100).

6. The fastener (100) of claim 1, wherein a crown (222) of the collet body (118) is positioned distal from the plurality of clamping feet.

7. The fastener (100) of any one of claims 1 to 6, further comprising a drive head fixedly coupled to the drive screw (200) and configured to drive rotation of the drive screw (200) while its axial position remains stationary.

8. A method for operating a fastener (100) of any one of claims 1 to 7, comprising:
transitioning the fastener (100) between an insertion and removal configuration and a clamping configuration; and
adjusting a grip length between a proximal clamping surface (258) and a distal clamping surface (228) while an axial length between the distal clamping surface (228) and a distal end (106) of the fastener (100) remains constant;
wherein a body assembly (110) in the fastener (100) includes a pin (212) that extends through an opening (216) in a shaft (210) and multiple axially extending slots (214) in a sleeve (112).

9. The method of claim 8, wherein, when the fastener (100) transitions between the insertion and removal configuration and the clamping configuration, an axial position of the pin (212) within the multiple axially extending slots (214) varies.

10. The method of claim 9, wherein, when the fastener (100) in in the clamping configuration, the pin (212) bottoms out at distal axial sides of the multiple axially extending slots (214).

11. The method of claim 9, wherein, when the fastener (100) in in the clamping configuration, a distal end (106) of the shaft (210) bottoms out on a cap (108) that is coupled to a distal opening of the sleeve (112).

12. The method of any one of claims 8 to 11, wherein the fastener (100) includes a drive head coupled to a screw and configured to drive rotation of the screw while its axially position remains constant.

## Patentansprüche

1. Befestigungselement (100), aufweisend:
eine Hauptteilanordnung (110), die für Folgendes ausgelegt ist;
das Befestigungselement (100) zwischen einer Spannkonfiguration und einer Einführ- und Entnahmekonfiguration zu überführen; und,
in der Spannkonfiguration, eine axiale Länge zwischen einer proximalen Spannfläche (258) und einer distalen Spannfläche (228) einzustellen, während eine axiale Länge zwischen der distalen Spannfläche (228) und einem distalen Ende (106) des Befestigungselements (100) konstant bleibt;
wobei die Hauptteilanordnung (110) einen Schaft (210) umfasst, der von einer Antriebsspindel (200) axial beabstandet ist,
wobei die Hauptteilanordnung (110) umfasst:
eine Hülse (112) mit einer Mehrzahl von Spannfußöffnungen (234); und
einen Spannzangenkörper (118) mit einem oder mehreren Schenkeln (224), die sich von einer Krone (222) aus erstrecken und jeweils einen Spannfuß umfassen, und wobei sich die Spannfüße durch die Mehrzahl von Spannfußöffnungen (234) erstrecken; **dadurch gekennzeichnet, dass**,
wenn sich das Befestigungselement (100) in der Spannkonfiguration befindet, eine Oberfläche der Spannfüße mit einer Oberfläche der Spannfußöffnungen (234) in Kontakt ist und Lasten darauf überträgt.

2. Befestigungselement (100) nach Anspruch 1, wobei die Hauptteilanordnung (110) einen Stift (212) umfasst, der in mehrere axial verlaufende Schlitze (214) in einer Hülse (112) und in eine Öffnung (216) im Schaft (210) eingreift.

3. Befestigungselement (100) nach Anspruch 2, wobei:
sich eine axiale Position des Stifts (212) in den mehreren axial verlaufenden Schlitzen (214) ändert, wenn das Befestigungselement (100) zwischen der Spannkonfiguration und der Einführ- und Entnahmekonfiguration überführt wird; und
die axiale Position des Stifts (212) in den mehreren axial verlaufenden Schlitzen (214) konstant bleibt, solange sich das Befestigungselement (100) in der Spannkonfiguration befindet und die axiale Länge zwischen der oberen und der distalen Spannfläche (228) eingestellt wird.

4. Befestigungselement (100) nach Anspruch 3, wobei, wenn sich das Befestigungselement (100) in der Spannkonfiguration befindet:
ein distales Ende (608) des Schafts (210) berührt eine Kappe (108), die mit einer unteren Öffnung der Hülse (112) verbunden ist; oder
der Stift (212) berührt distale axiale Seiten der mehreren axial verlaufenden Schlitze (214).

5. Befestigungselement (100) nach Anspruch 1, wobei die Hauptteilanordnung (110) eine abgerundete Kappe umfasst, die mit einer unteren Öffnung der Hülse (112) verbunden ist, und wobei die abgerundete Kappe das distale Ende (106) des Befestigungselements (100) bildet.

6. Befestigungselement (100) nach Anspruch 1, wobei eine Krone (222) des Spannzangenkörpers (118) gegenüber der Mehrzahl von Spannfüßen distal positioniert ist.

7. Befestigungselement (100) nach einem der Ansprüche 1 bis 6, darüber hinaus einen Antriebskopf aufweisend, der mit der Antriebsspindel (200) fest verbunden und dafür ausgelegt ist, die Antriebsspindel (200) in Drehung zu versetzen, während ihre axiale Position unverändert bleibt.

8. Verfahren zum Betreiben eines Befestigungselements (100) nach einem der Ansprüche 1 bis 7, umfassend:
Überführen des Befestigungselements (100) zwischen einer Einführ- und Entnahmekonfiguration und einer Spannkonfiguration; und
Einstellen einer Klemmlänge zwischen einer proximalen Spannfläche (258) und einer distalen Spannfläche (228), während eine axiale Länge zwischen der distalen Spannfläche (228) und einem distalen Ende (106) des Befestigungselements (100) konstant bleibt;
wobei eine Hauptteilanordnung (110) in dem Befestigungselement (100) einen Stift (212) umfasst, der sich durch eine Öffnung (216) in einem Schaft (210) und durch mehrere axial verlaufende Schlitze (214) in einer Hülse (112) erstreckt.

9. Verfahren nach Anspruch 8, wobei, wenn das Befestigungselement (100) zwischen der Einführ- und Entnahmekonfiguration und der Spannkonfiguration überführt wird, sich eine axiale Position des Stifts (212) in den mehreren axial verlaufenden Schlitzen (214) ändert.

10. Verfahren nach Anspruch 9, wobei, wenn sich das Befestigungselement (100) in der Spannkonfiguration befindet, der Stift (212) an distalen axialen Seiten der mehreren axial verlaufenden Schlitze (214) seinen Tiefpunkt erreicht.

11. Verfahren nach Anspruch 9, wobei, wenn sich das Befestigungselement (100) in der Spannkonfiguration befindet, ein distales Ende (106) des Schafts (210) an einer Kappe (108), die mit einer distalen Öffnung der Hülse (112) verbunden ist, seinen Tiefpunkt erreicht.

12. Verfahren nach einem der Ansprüche 8 bis 11, wobei das Befestigungselement (100) einen Antriebskopf umfasst, der mit einer Spindel verbunden und dafür ausgelegt ist, die Spindel in Drehung zu versetzen, während ihre axiale Position konstant bleibt.

## Revendications

1. Dispositif de fixation (100), comprenant :
un ensemble de corps (110) configuré pour :
faire passer le dispositif de fixation (100) entre une configuration de serrage et une configuration d'insertion et de retrait ; et
dans la configuration de serrage, ajuster une longueur axiale entre une surface de serrage proximale (258) et une surface de serrage distale (228) tandis qu'une longueur axiale entre la surface de serrage distale (228) et une extrémité distale (106) du dispositif de fixation (100) reste constante ;
dans lequel l'ensemble de corps (110) comporte un arbre (210) qui est axialement espacé d'une vis d'entraînement (200),
dans lequel l'ensemble de corps (110) comporte :
un manchon (112) avec une pluralité d'ouvertures de pieds de serrage (234) ; et
un corps de douille de serrage (118) avec une ou plusieurs pattes (224) qui s'étendent à partir d'une couronne (222) et chacune comporte un pied de serrage et dans lequel les pieds de serrage s'étendent à travers la pluralité d'ouvertures de pieds de serrage (234) ;
**caractérisé en ce que**,
lorsque le dispositif de fixation (100) est dans la configuration de serrage, une surface des pieds de serrage est en contact avec une surface des ouvertures de pieds de serrage (234) et transfère des charges sur celle-ci.

2. Dispositif de fixation (100) selon la revendication 1, dans lequel l'ensemble de corps (110) comporte une broche (212) qui s'accouple avec de multiples fentes (214) s'étendant axialement dans un manchon (112) et une ouverture (216) dans l'arbre (210).

3. Dispositif de fixation (100) selon la revendication 2, dans lequel :
une position axiale de la broche (212) dans les multiples fentes (214) s'étendant axialement varie lorsque le dispositif de fixation (100) passe entre la configuration de serrage et la configuration d'insertion et de retrait ; et
la position axiale de la broche (212) dans les multiples fentes (214) s'étendant axialement reste constante tandis que le dispositif de fixation (100) est dans la configuration de serrage et la longueur axiale entre les surfaces de serrage supérieure et distale (228) est ajustée.

4. Dispositif de fixation (100) selon la revendication 3, dans lequel lorsque le dispositif de fixation (100) est dans la configuration de serrage :
une extrémité distale (606) de l'arbre (210) entre en contact avec un capuchon (108) qui est couplé à une ouverture inférieure du manchon (112) ; ou
la broche (212) entre en contact avec des côtés axiaux distaux des multiples fentes (214) s'étendant axialement.

5. Dispositif de fixation (100) selon la revendication 1, dans lequel l'ensemble de corps (110) comporte un capuchon rond couplé à une ouverture inférieure du manchon (112) et dans lequel le capuchon rond forme l'extrémité distale (106) du dispositif de fixation (100).

6. Dispositif de fixation (100) selon la revendication 1, dans lequel une couronne (222) du corps de douille de serrage (118) est positionnée de manière distale par rapport à la pluralité de pieds de serrage.

7. Dispositif de fixation (100) selon l'une quelconque des revendications 1 à 6, comprenant en outre une tête d'entraînement couplée de manière fixe à la vis d'entraînement (200) et configurée pour entraîner en rotation la vis d'entraînement (200) tandis que sa position axiale reste stationnaire.

8. Procédé destiné à mettre en œuvre un dispositif de fixation (100) selon l'une quelconque des revendications 1 à 7, comprenant le fait de :
faire passer le dispositif de fixation (100) entre une configuration d'insertion et de retrait et une configuration de serrage ; et
ajuster une longueur de prise entre une surface de serrage proximale (258) et une surface de serrage distale (228) tandis qu'une longueur axiale entre la surface de serrage distale (228) et une extrémité distale (106) du dispositif de fixation (100) reste constante ;
dans lequel un ensemble de corps (110) dans le dispositif de fixation (100) comporte une broche (212) qui s'étend à travers une ouverture (216) dans un arbre (210) et de multiples fentes (214) s'étendant axialement dans un manchon (112).

9. Procédé selon la revendication 8, dans lequel, lorsque le dispositif de fixation (100) passe entre la configuration d'insertion et de retrait et la configuration de serrage, une position axiale de la broche (212) à l'intérieur des multiples fentes (214) s'étendant axialement varie.

10. Procédé selon la revendication 9, dans lequel, lorsque le dispositif de fixation (100) est dans la configuration de serrage, la broche (212) touche le fond au niveau des côtés axiaux distaux des multiples fentes (214) s'étendant axialement.

11. Procédé selon la revendication 9, dans lequel, lorsque le dispositif de fixation (100) est dans la configuration de serrage, une extrémité distale (106) de l'arbre (210) touche le fond sur un capuchon (108) qui est couplé à une ouverture distale du manchon (112).

12. Procédé selon l'une quelconque des revendications 8 à 11, dans lequel le dispositif de fixation (100) comporte une tête d'entraînement couplée à une vis et configurée pour entraîner en rotation la vis tandis que sa position axiale reste constante.
